(19) **Europäisches Patentamt**

**European Patent Office**

**Office européen des brevets**

(11) **EP 0 659 021 B1**

(12) **EUROPEAN PATENT SPECIFICATION**

(45) Date of publication and mention
of the grant of the patent:
**29.03.2000 Bulletin 2000/13**

(51) Int. Cl.[7]: **H04N 7/26**, H04N 7/36,
H04N 7/14, G06T 7/20,
H04N 5/14

(21) Application number: **94203625.2**

(22) Date of filing: **14.12.1994**

(54) **Detection of global translations between images**

Detektion von globaler Translation zwischen Bildern

Détection de translation globale entre images

(84) Designated Contracting States:
**DE FR GB**

(30) Priority: **18.12.1993 GB 9325922**

(43) Date of publication of application:
**21.06.1995 Bulletin 1995/25**

(73) Proprietors:
• **KODAK LIMITED**
**Harrow, Middlesex HA1 4TY (GB)**
Designated Contracting States:
**GB**
• **EASTMAN KODAK COMPANY**
**Rochester, New York 14650-2201 (US)**
Designated Contracting States:
**DE FR**

(72) Inventor:
**Loveridge, Jennifer, Clare,**
**c/o Kodak Limited**
**Harrow, Middlesex, HA1 4TY (GB)**

(74) Representative:
**Haile, Helen Cynthia et al**
**Kodak Limited**
**Patent Department**
**Headstone Drive**
**Harrow, Middlesex HA1 4TY (GB)**

(56) References cited:
**EP-A- 0 414 113**        **EP-A- 0 480 807**
**US-A- 4 922 341**

• ICASSP-92, vol. 3, 23 March 1992 IEEE, SAN
FRANCISCO, CA, USA, pages 261-264, XP
000378923 R.W. YOUNG ET AL. 'Motion
Estimation using Lapped Transform'
• SIGNAL PROCESSING OF HDTV II, 30 August
1989 ELSEVIER, NL, pages 131-137, XP
000215234 M. ZIEGLER 'Hierarchical Motion
Estimation using the Phase Correlation Method
in 140 Mbit/s HDTV Coding'
• IEEE TRANSACTIONS ON IMAGE PROCESSING,
vol. 2, no. 1, 1 January 1993 NEW YORK US,
pages 2-17, XP 000377896 R.W. YOUNG ET AL.
'Frequency-Domain Motion Estimation using a
Complex Lapped Transform'
• 1993 IEEE INTERNATIONAL SYMPOSIUM ON
CIRCUITS AND SYSTEMS, vol. 1, 3 May 1993
CHICAGO, IL, USA, pages 834-837, XP
000410127 R. MANDUCHI ET AL. 'Accuracy
Analysis for Correlation-Based Image
Registration Algorithms'

**Description**

**Field of the Invention**

The present invention relates to the detection of global translations between images and is more particularly concerned with a digital processing method for such detection to sub-pixel accuracy between images which are related either temporally or spatially.

**Background of the Invention**

Images may, for example, comprise part or all of a time-varying sequence, or the colour separations of a single image. Typical applications for the method of the present invention include the automatic detection and correction, to high accuracy, of spatial unsteadiness occurring in a time-varying sequence of images which have originated from motion picture film, the automatic alignment of pairs of images of the same subject taken at different times, and the automatic registration of colour separations of a single image.

There are two classes of algorithms by which spatial translation can be measured, the first relating to the use of non-image information, for example, the position of sprocket holes or the frame edge or the use of fiducial marks, and the second depending on the use of the information content within the image. The second class of algorithms can be referred to as 'motion estimation' algorithms. The present invention belongs to this second class.

Motion estimation algorithms have the advantage of versatility in this particular application. They can be implemented on any image set independent of its source or history.

Motion estimation algorithms may be broadly divided into three types:-

1. Block matching algorithms.

These are described in "*A Hardware Motion Compensator for a Videoconferencing Codec*", I Parke and D G Morrison, and "*Motion-compensated Field Rate Conversion for HDTV Display*", G M X Fernando, both from IEEE Colloquium "Motion Compensated Image Processing", Digest 1987/86, and "*The Development of an HDTV to PAL Standards Converter*", T Ohmura, IBC86 Conference Proceedings, pages 221 to 224.

In this method, the matching is implemented in the spatial domain, based on either maximum cross-correlation or minimum mean square error. The method is amenable to efficient hardware implementation by the application of hierarchical searching techniques.

2. Spatio-temporal constraint or gradient matching algorithms.

These are described in "*Motion Estimation for Frame-rate Conversion*", E A Krause, MIT PhD Thesis, ATRP-T-70 (1987).

The method used here is based on the assumption that movement occurs along paths of constant luminance. Thus, if luminance, $L$, is a function of spatial position, $(x,y)$ and time, $t$, it is required that:-

$$\frac{dL}{dt}(x(t), y(t), t) = 0$$

Expanding this, and neglecting higher order terms yields:

$$\frac{\partial L}{\partial x}\frac{dx}{dt} + \frac{\partial L}{\partial y}\frac{dy}{dt} + \frac{\partial L}{\partial t} = 0$$

Estimates for $\frac{dx}{dt}$ and $\frac{dy}{dt}$ may be obtained by placing constraints on the smoothness of the image flow, both spatially and temporally. Typically, the spatial and temporal gradients of the luminance signal are approximated from the output from local spatial high-pass filtering and the inter frame difference of corresponding pixel values respectively. This is described in "*Methods for Measuring Small Displacements of Television Images*", C Cafforio et al, IEEE Transactions on Information Theory, IT-22, 5, 573-579 (1976).

3. Phase correlation algorithms.

These are described in "*TV Picture Motion Measurement*", G A Thomas, WO-A-87/05769 and "*Cine Unsteadiness in Video Signal Correction*", K L Minakovic, GB-A-2 187 913; "Hierarchical Motion Estimation using the Phase Correlation Method in 140 MBIT/S HDTV-Coding", M Ziegler, Signal Processing of HDTV, 11, Elsevier, NL, pp. 131-137; and "Motion Estimation using Lapped Transforms", R.W.Young et.al, ICASSP-92, vol. 3,pp. 261-264.

Phase correlation is based in the principle that x-y translations in the spatial domain correspond to phase shifts in the Fourier domain. The phase shift at each frequency may be calculated as follows:-

$$\triangle\Phi(u,v) = \frac{F(u,v).G(u,v)^*}{|F(u,v).G(u,v)^*|}$$

where *F* and *G* are the two-dimensional Fourier transforms of blocks *f,g* in corresponding positions from neighbouring frames in the input sequence, or from colour separations of the same image. The inverse transform of $\triangle\Phi(u,v)$ generates a correlation surface which contains spikes (more precisely, sinc functions which result from the effective window in the Fourier domain) at positions corresponding to an x-y displacement, and where the height of the spikes is related to the number of pixels within the block which have moved with that displacement.

**Problem to be solved by the Invention**

Methods utilising block matching algorithms as discussed above are not suitable for reliable measurement of displacement or translation to sub-pixel accuracy.

The method used in spatio-temporal constraint or gradient matching algorithms is robust in generating vectors of sub-pixel accuracy only where the displacement is small - for example, of the order of one pixel. The principles which underpin this method render it suitable for the generation of motion vectors on a local (pixel by pixel) rather than a global (block by block) basis. Hence motion estimation techniques based on the assumptions of optical flow are not appropriate for the detection of global translations.

Phase correlation can be demonstrated to be extremely robust in the presence of frame-independent noise (which is spread across the entire correlation surface), and independent movement within the scene (which generally manifests itself as low-amplitude independent spikes in the correlation surface which can be separated without adverse effect on the spike corresponding to a global displacement).

In principle, therefore, phase correlation appears to be the most suitable approach to estimate displacements where a single global vector is required per frame.

However, phase correlation yields a correlation surface which is sampled at the sampling rate of the input data, and hence, in its simplest form, generates vectors to pixel accuracy. It is possible to perform a two-dimensional interpolation over the correlation surface in an attempt either to reconstruct a continuous correlation surface and subsequently to estimate the position of the peak to sub-pixel accuracy, or in a single step, to estimate the corresponding position of a peak in an equivalent continuous surface.

It can be shown, however, that errors exist in the reconstructed surface due to edge effects and spectral leakage.

In the former case, blocks are selected from the pair of images at corresponding pixel positions. As a consequence of the global displacement between the image pair, corresponding blocks contain picture information from slightly different areas of the image.

In the latter case, the signals input to the phase correlation are sampled, hence the phase-difference signals in the Fourier domain are repeated centred around multiples of the sampling frequency. If these 'repeat spectra' are filtered out using a window with a cut-off frequency at the input nyquist frequency, then the inverse transform of the window is effectively convolved with the sampled correlation surface. Alternatively, if the phase-difference signal with 'repeat spectra', and hence the discontinuities which occur at the nyquist frequency, is inverse transformed, these discontinuities produce errors in the correlation surface. As a result of these errors in the reconstructed surface, displacement vectors are generated which are only accurate to around 0.5 of a pixel.

Several methods have been proposed to improve this accuracy. For example, using the phase correlation algorithm discussed above, the Fourier domain can be padded with '0's before the inverse transform, to effect a sinc function interpolation in the spatial domain. However, this results in objectionable ringing in the spatial domain which may be reduced by windowing techniques, but the overall computational complexity of the method is high.

**Summary of the Invention**

It is therefore an object of the present invention to provide a comparatively simple method to extend the phase correlation technique to generate displacement vectors with an accuracy significantly better than 0.5 of a pixel. In this case, the extension of the phase correlation technique comprises a Fourier domain correlation method. The image may then be realigned according to the global displacement vector by means of spatial interpolation to sub-pixel accuracy using a method as described, for example, in US-A-5 243 433.

In accordance with one aspect of the present invention, there is provided a method of detecting global translations between two images comprising the steps of:-

a) generating at least one displacement vector using normalised phase correlation techniques indicative of the translation between the two images to pixel accuracy using the equation:-

$$\triangle\Phi(u,v) = \frac{F(u,v).G(u,v)^*}{|F(u,v).G(u,v)^*|^n}$$

where;

F(u,v) and G(u,v) are two dimensional Fourier Transforms at frequencies $u$, $v$ of blocks f,g in corresponding positions in the two images, n is a normalization factor,

b) performing an inverse Fourier transform on $\triangle\Phi$(u,v) to generate correlation surfaces,
c) storing the correlation surfaces obtained in step b);
d) detecting significant peaks in the correlation surfaces, and assigning a vector representing the displacement position of each of the detected peaks;
e) selecting a single vector from the assigned vectors which most accurately represents the global translation between the two images; and

f) interpolating the stored correlation surface from which the single vector was selected, using spatial interpolation, to determine a single vector $(x+\delta x, y+\delta y)$ which corresponds to the subpixel displacement between frames, characterized by: $0<n<1$, whereby a partially normalized phase correlation is performed.

Preferably, step e) includes applying a threshold to the at least one displacement vector to provide an indication of suitable vector(s).

In accordance with the present invention, partially normalised phase correlation is applied to a number of corresponding sub-blocks of an appropriate size in the pair of images. A set of vectors is obtained from the generated correlation surfaces. This set may comprise all vectors which correspond to peaks of height greater than a pre-specified value, or the vectors which correspond to the peak of the greatest height for each correlation surface, or vectors selected according to some other appropriate measure. Of this set of vectors, a single vector is selected, by some appropriate measure, which most accurately represents the global displacement between the two frames being correlated to pixel accuracy. A two-dimensional quadratic interpolation is then performed on the correlation surface which generated that global displacement vector to achieve a vector to sub-pixel accuracy.

**Advantageous Effect of the Invention**

The advantage of the method according to the present invention over those described in the prior art is that it takes advantage of the strengths particular to the phase correlation and cross-correlation techniques, and is comparatively simple to implement in hardware.

As discussed above, phase correlation is extremely robust due to the spiky nature of the correlation surface, to noise and independent movement within the scene. Hence vectors can be generated with high confidence - but only to pixel accuracy.

Conversely, cross-correlation generates a correlation surface which is smooth and substantially less robust to noise. These techniques can hence be used to generate vectors with higher accuracy but low confidence.

By using a weighted hybrid of phase correlation and cross-correlation techniques, errors in the the reconstructed correlation surface are reduced. Hence, vectors of sub-pixel accuracy may be obtained with a high degree of confidence.

**Brief Description of the Drawings**

For a better understanding of the present invention, reference will now be made, by way of example only, to the accompanying drawings in which:-

Figure 1 illustrates a block diagram of apparatus for carrying out the method of the present invention; and

Figure 2 is a block diagram illustrating the various steps in the method according to the present invention.

**Detailed Description of the Invention**

As mentioned above, the present invention can be used to determine displacements or translations between pairs of image frames due to movement from frame to frame which is not due to movement of image detail.

Furthermore, the translation to be measured may be from the colour separations of a single image and then the translation is required to effect the correct alignment of the colour images when the frames are reconstructed to produce a full colour final image.

The details of a preferred implementation of the present invention for each pair of successive frames in sequence, or for a pair of separations from a colour change is as follows:-

1) Store blocks at corresponding positions in the paris of frames. This may be either five (corners plus centre) or nine (corners, centre edges plus centre) blocks each comprising 64 x 64 pixels.

2) Perform a two-dimensional partially normalised phase correlation on each corresponding pair of blocks as given in equation (1) below:-

$$\triangle\Phi(u,v) = \frac{F(u,v).G(u,v)^*}{|F(u,v).G(u,v)^*|^n} \qquad (1)$$

The optimum value for $n$ which corresponds to the value which generates displacement vectors of the greatest accuracy have been found to lie in the range of 0.5 to 0.6. The inverse transform is then taken to obtain a correlation surface for each block pair.

3) Threshold each correlation surface at a value corresponding to the minimum value expected for significant peaks (typically around 0.1 to 0.2). This will generally yield a significant vector at only one displacement position. Finally, use a search technique to find the position of the remaining peak (if any) with the greatest value. In blocks where there is very little input signal or most of the block was in independent motion, there may be no remaining peaks.

4) Take the modal value from the resulting vector set (that is, the displacement vector which occurs most frequently). This is the global motion vector $(x,y)$ to pixel accuracy.

5) For sub-pixel accuracy, quadratic interpolation is performed on the correlation surface which generated the modal vector with maximum peak height (that is, with maximum confidence):-

$$x+\delta x = x + \frac{C_{1,0} - C_{-1,0}}{2(2C_{0,0} - C_{-1,0} - C_{1,0})}$$

$$y+\delta y = y + \frac{C_{0,1} - C_{0,-1}}{2(2C_{0,0} - C_{0,-1} - C_{0,1})}$$

where

$C_{0,0}$ is the value of the correlation surface at the position of the global motion vector,
$C_{1,0}$ is the value of one pixel to the right etc.

The result is a single vector ($x+\delta x, y+\delta y$) for each pair of successive frames which corresponds to the sub-pixel displacement between them.

Where displacement vectors are calculated for a sequence of images, calculations for the phase correlation may be reduced by storing the Fourier coefficients from the second frame of each pair for use when that frame becomes the first of the subsequent pair, or alternatively, by storing the Fourier coefficients for some reference frame in the sequence.

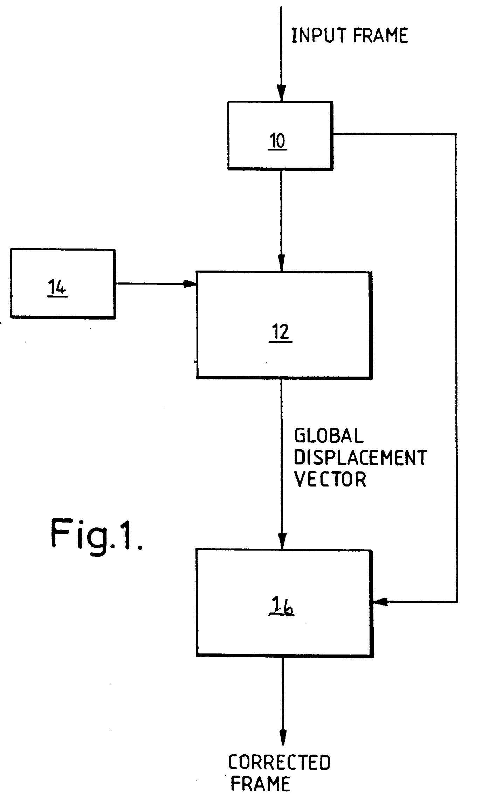

Figure 1 illustrates the overall apparatus which can be used to effect correction for global translation. The apparatus comprises an image store 10, a phase correlation device 12, a reference frame stores 14 and a spatial interpolation unit 16.

The reference frame store 14 store Fourier coefficients derived from a reference frame. This reference frame may be the first frame of a sequence of frames, the subsequent frames being corrected to be in alignment with the first frame.

The spatial interpolation unit 16 operates on the principle as described in US-A-5 243 433 discussed above, to provide the necessary correction.

Once the Fourier coefficients values have been stored in the reference frame store 14, an input image frame to which global translation correction is to be applied is input into the image store 10. The input image is then fed to the phase correlation device 12. Fourier coefficients values are input into the device 12 from the store 14 so that correlation between the reference frame and the input frame can be achieved. After correlation in the phase correlation device 12, an output global displacement vector is obtained which gives the correction which is to be applied to the input image frame in the spatial interpolation unit 16 to compensate for the translation between that input image frame and the reference frame.

The phase correlation device 12 may comprise a VME bus card and FFT/DSP chips programmed to carry out the desired correlation functions.

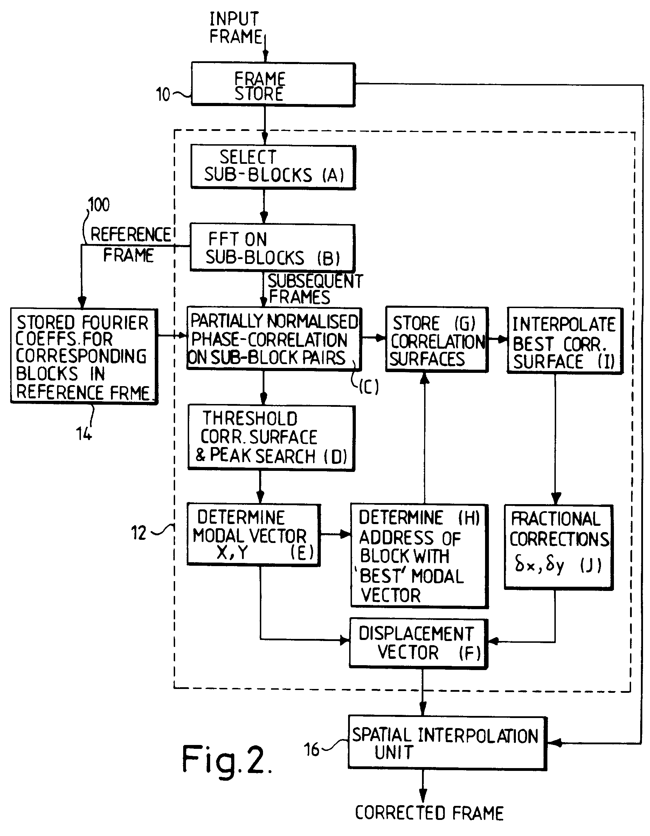

Figure 2 illustrates the steps of the preferred method in more detail. Components of the apparatus already mentioned are referenced the same.

At the start of any global translation correction, a reference frame is chosen against which all subsequent frames are aligned. The first frame, the reference frame, is input to the frame store 10, and is fed to the phase correlation device 12 indicated by the dotted line in Figure 2. The first step carried out on this frame is the selection of sub-blocks values as shown by box (A). These values are passed to box (B) where the Fourier coefficients are determined. These coefficients are stored in reference frame store 14 (as shown by line 100). The apparatus is now ready to detect global translation and then provide the global displacement vector for feeding to the spatial interpolation unit 16.

An input image frame to be corrected is input to the frame store 10. As with the reference frame, it is input to the phase correlation device 12 where the sub-blocks are selected in box (A), Fourier transformation of these sub-blocks is carried out in box (B) and then partially normalised phase correlation of the sub-block pairs is carried out in box (C) using the stored Fourier coefficients from reference frame store 14. This correlation provides a correlation surface with peaks corresponding to correlation between the input image frame and the reference image frame. A threshold is then applied to the correlation surface to determine the peaks, as described previously, in box (D). The modal vector is then determined in box (E) from the peaks determined in box (D) together with the address of the block which generated the modal vector - the modal vector $x,y$ being fed to box (F).

The correlation surfaces obtained by the partially normalised phase correlation on each of the sub-block pairs in box (C) are stored in box (G).

Information from box (E) relating to the address of the block which generated the modal vector is determined in box (H) and fed to box (G).

Interpolation of the 'best' correlation surface is then carried out in box (I) to provide the fractional corrections $\delta x,\delta y$ in box (J).

The output from box (J) is then fed into box (F) to provide the displacement vector for the spatial interpolation unit 16. The input image frame from the frame store 10 is also fed to the spatial interpolation unit to effect correction on the input image.

**Claims**

1. A method of detecting global translations between two images comprising the steps of:-

    a) generating at least one displacement vector using normalised phase correlation techniques indicative of the translation between the two images to pixel accuracy using the equation:-

$$\triangle\Phi(u,v) = \frac{F(u,v).G(u,v)^*}{|F(u,v).G(u,v)^*|^n}$$

where;

F(u,v) and G(u,v) are two dimensional Fourier Transforms at frequencies $u$, $v$ of blocks f,g in corresponding positions in the two images,

n is a normalization factor,

b) performing an inverse Fourier transform on $\triangle\Phi(u,v)$ to generate correlation surfaces,
c) storing the correlation surfaces obtained in step b);
d) detecting significant peaks in the correlation surfaces, and assigning a vector representing the displacement position of each of the detected peaks;
e) selecting a single vector from the assigned vectors which most accurately represents the global translation between the two images; and
f) interpolating the stored correlation surface from which the single vector was selected, using spatial interpolation, to determine a single vector (x+δx,y+δy) which corresponds to the subpixel displacement between frames, characterized by: 0 < n < 1, whereby a partially normalized phase correlation is performed.

2.  A method according to claim 1, wherein step e) includes applying a threshold to the at least one displacement vector to provide an indication of suitable vector(s).

3.  A method according to claim 1 or 2, wherein step e) includes selecting the displacement vector which occurs most frequently from the at least one generated displacement vector to select the single vector.

4.  A method according to any one of the preceding claims, wherein 0.5 < $n$ < 0.6.

**Patentansprüche**

1.  Verfahren zum Erfassen globaler Translationen zwischen zwei Bildern, mit folgenden Schritten:

    a) Erzeugen von mindestens einem Verschiebungsvektor unter Verwendung normierter Phasenkorrelationsverfahren, welche die Translation zwischen den beiden Bildern bis auf Pixelgenauigkeit kennzeichnen, mit folgender Gleichung:

$$\triangle\Phi(u,v) = \frac{F(u,v).G(u,v)^*}{|F(u,v).G(u,v)^*|^n}$$

worin

F(u,v) und G(u,v) zweidimensionale Fourier-Transformationen bei Frequenzen u, v der Blöcke f, g in entsprechenden Positionen in den beiden Bildern darstellen, und n ein Normierungsfaktor ist;

b) Durchführen einer Fourier-Rücktransformation von $\triangle\Phi(u,v)$, um Korrelationsflächen zu erzeugen;
c) Speichern der in Schritt b) erhaltenen Korrelationsflächen;
d) Erfassen wichtiger Spitzen in den Korrelationsflächen und Zuordnen eines Vektors, der die Verschiebungsposition jeder der erfaßten Spitzen darstellt;
e) Auswählen eines einzelnen Vektors aus den zugeordneten Vektoren, der am genauesten die globale Translation zwischen den beiden Bildern darstellt; und
f) Interpolieren der gespeicherten Korrelationsfläche, aus welcher der Einzelvektor ausgewählt wurde, unter Verwendung räumlicher Interpolation, um einen Einzelvektor (x+δx, y+δy) zu bestimmen, welcher der Subpixel-Verschiebung zwischen den Bildfeldern entspricht, **dadurch gekennzeichnet**, daß 0 < n < 1, wobei eine teilweise normierte Phasenkorrelation durchgeführt wird.

2.  Verfahren nach Anspruch 1, dadurch gekennzeichnet, daß Schritt e) Folgendes einschließt:

    -   Beaufschlagen des mindestens einen Verschiebungsvektors mit einem Schwellenwert, um ein Kennzeichen für geeignete Vektoren bereitzustellen.

3.  Verfahren nach Anspruch 1 oder 2, dadurch gekennzeichnet, daß Schritt e) Folgendes einschließt:

    -   Auswählen des am häufigsten auftretenden Verschiebungsvektors, aus dem mindestens einen erzeugten Verschiebungsvektor, um den Einzelvektor auszuwählen.

4.  Verfahren nach einem der vorhergehenden Ansprüche, dadurch gekennzeichnet, daß 0,5 < n < 0,6 ist.

**Revendications**

1.  Procédé de détection des translations globales entre deux images comprenant les étapes de :

a) générer au moins un vecteur déplacement en utilisant des techniques de corrélation de phase normalisées indicatif de la translation entre les deux images à une précision du pixel en utilisant l'équation :

$$\triangle\Phi(u,v) = \frac{F(u,v).G(u,v)^*}{|F(u,v).G(u,v)^*|^n}$$

où ;

F(u,v) et G(u,v) sont des transformées de Fourier à deux dimensions aux fréquences u, v des blocs dans des positions correspondantes dans les deux images,
n est un facteur de normalisation,

b) réaliser une transformation de Fourier inverse sur $\triangle\Phi(u,v)$ pour produire des surfaces de corrélation,
c) mémoriser les surfaces de corrélation obtenues à l'étape b);
d) détecter des pics significatifs dans les surfaces de corrélation et assigner un vecteur représentant la position de déplacement de chacun des pics détectés ;
e) choisir un vecteur unique à partir des vecteurs assignés qui représentent plus précisément la translation globale entre les deux images ; et
f) interpoler la surface de corrélation mémorisée à partir de laquelle le vecteur unique a été choisi, en utilisant une interpolation spatiale, pour déterminer un vecteur unique $(x+\delta x, y+\delta y)$ qui correspond au déplacement de sous-pixel entre des images, caractérisé par : $0<n<1$, d'où il résulte qu'une corrélation de phase partiellement normalisée est effectuée.

2. Procédé selon la revendication 1, dans lequel l'étape e) inclut l'application d'un seuil à au moins un vecteur de déplacement pour procurer une indication du ou des vecteurs approprié(s).

3. Procédé selon la revendication 1 ou 2, dans lequel l'étape e) inclut le choix du vecteur déplacement qui se produit plus fréquemment à partir d'au moins un vecteur déplacement produit pour choisir le vecteur unique.

4. Procédé selon l'une quelconque des revendications précédentes, dans lequel $0,5<n<0,6$.

INPUT FRAME

10

14

12

GLOBAL
DISPLACEMENT
VECTOR

Fig.1.

16

CORRECTED
FRAME

Fig.2.